# EUROPEAN PATENT APPLICATION

(11) **EP 4 661 176 A1**
(43) Date of publication of application: **10.12.2025**
(21) Application number: 24788935.5
(22) Date of filing: 28.03.2024
(51) Int. Cl.: H01M 50/24, H01M 50/204

(54) **BATTERY PACK**

(30) Priority: 13.04.2023 KR 20230048552
(71) Applicant: LG Energy Solution, Ltd., Seoul 07335 (KR)
(72) Inventor: SHIN, Ju Hwan, Daejeon 34122 (KR); HUR, Nam Hoon, Daejeon 34122 (KR); LEE, Hyoung Suk, Daejeon 34122 (KR)
(74) Representative: Plasseraud IP
(86) International application number: PCT/KR2024/003937
(87) International publication number: WO 2024/214992

(57) **Abstract**

A battery pack including a pack case including a lower case and an upper case that define an inner space, a plurality of battery cells in the inner space, and a pack gasket between the lower case and the upper case is provided. The pack gasket includes a gasket body extending along portions of the upper case and the lower case that are coupled together and an elastic sealing material on an edge of the gasket body in a width direction.

## Description

### CROSS-REFERENCE TO RELATED APPLICATIONS

This application is a 371 National Stage entry of PCT Application No. PCT/KR2024/003937, filed March 28, 2024, which claims the benefit of foreign priority based on Korean Patent Application No. 10-2023-0048552, filed on April 13, 2023, the entire contents of which are incorporated by reference herein.

### TECHNICAL FIELD

The present disclosure relates to a battery pack, and more specifically, to a battery pack that has improved airtight performance and slim appearance and that can be manufactured by a simplified assembly process.

### BACKGROUND

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

Recently, the demand for large-capacity battery packs applicable to electric vehicles, etc. is increasing. In a large-capacity battery pack mounted in a vehicle, a thermal event may occur due to an increase in temperature in some battery cells during electrical charging/discharging of a plurality of battery cells. When the thermal event occurs in the battery pack, it is required to prevent an internal gas from leaking in an uncontrolled manner in terms of safety, and to this end, the battery pack is required to be sealed more strongly.

### SUMMARY

### [Technical Problem]

The present disclosure is directed to providing a battery pack that has improved airtight performance and slim appearance and that can be manufactured by a simplified assembly process.

### [Technical Solution]

An aspect of the present disclosure provides a battery pack including a pack case including a lower case and an upper case that define an inner space, a plurality of battery cells in the inner space, and a pack gasket between the lower case and the upper case, in which the pack gasket includes a gasket body extending along portions of the upper case and the lower case that are coupled to each other, and an elastic sealing material on an edge of the gasket body in a width direction.

In some aspects, a central portion of the gasket body in the width direction may be exposed from the elastic sealing material.

In some aspects, a dimension of the gasket body in a thickness direction may be less than a dimension of the elastic sealing material in the thickness direction.

In some aspects, the gasket body may be coupled to the upper case by welding.

In some aspects, stiffness of the gasket body may be higher than stiffness of the elastic sealing material. In some aspects, the gasket may include a metal.

In some aspects, the pack gasket may include two or more gasket bodies, and the elastic sealing material may extend from one gasket body to another gasket body adjacent to the gasket body.

In some aspects, a width of the pack gasket between the two adjacent gasket bodies may be less than a width of a central portion of the pack gasket in a longitudinal direction.

In some aspects, a width of the pack gasket between the two adjacent gasket bodies may be substantially same as a width of a central portion of the pack gasket in a longitudinal direction.

In some aspects, the pack gasket may be configured to be bendable in a direction perpendicular to a plane formed by the pack gasket between the two adjacent gasket bodies.

In some aspects, the gasket body may include a metal, and a ratio of a total length of the gasket body to a total length of the pack gasket along a center line may be 60% or more.

Another aspect of the present disclosure provides a battery pack including a pack case including a lower case and an upper case that define an inner space, a plurality of battery cells in the inner space, and a pack gasket between the lower case and the upper case, in which the pack gasket is coupled to the upper case by welding and coupled to the lower case through a fastener.

In some aspects, the pack gasket may include a metal strip, and the metal strip may be coupled to the upper case by welding.

In some aspects, the pack gasket may further include a sealing material on an edge of the metal strip.

In some aspects, the sealing material may include an elastic member, and the sealing material may be elastically compressed against the upper case at a position on the upper case to which the pack gasket is coupled by welding.

### [Advantageous Effects]

A battery pack of the present disclosure may have improved airtightness performance and slim appearance, and an assembly process thereof can be simplified.

Effects achievable from example aspects of the present disclosure are not limited to the above-described effects, and other effects that are not described herein will be clearly derived and understood by those of ordinary skilled in the art to which the example aspects of the present disclosure pertain from the following description. That is, unintended effects achieved when the example aspects of the present disclosure are implemented are derivable by those of ordinary skilled in the art from the example aspects of the present disclosure.

### BRIEF DESCRIPTION OF THE DRAWINGS

FIG. 1 is a perspective view of a battery pack according to example aspects of the present disclosure.
FIG. 2 is a perspective view of some components of a battery pack according to example aspects of the present disclosure.
FIG. 3 is a perspective view schematically illustrating a state in which an upper case and a pack gasket of FIG. 1 are coupled to each other.
FIG. 4 is a partial enlarged view of a part of FIG 3 indicated by A.
FIG. 5 is a cross-sectional view of a cross section of a pack gasket of FIG. 4 alone taken along line B-B' when the pack gasket is not coupled to an upper case.
FIG. 6 is a cross-sectional view of a cross section of the pack gasket of FIG. 4 taken along line B-B' when the pack gasket is coupled to an upper case.
FIG. 7 is a cross-sectional view of a cross section of the pack gasket of FIG. 4 taken along line C-C' when the pack gasket is coupled to an upper case.
FIG. 8 is a partial perspective view illustrating a state in which two or more gasket bodies are connected using a sealing material, according to an aspect of the present disclosure.
FIG. 9 is a partial perspective view illustrating a state in which two or more gasket bodies are connected using a sealing material, according to another aspect of the present disclosure.
FIG. 10 is a perspective view illustrating a state in which a part connecting a first gasket body and a second gasket body using a sealing material is bent.

### DETAILED DESCRIPTION

Hereinafter, aspects of the concept of the present disclosure will be described in detail with reference to the accompanying drawings. However, aspects of the concept of the present disclosure may be embodied in many different forms and thus the scope of the present disclosure should not be interpreted as being limited by the aspects described below. It should be understood that the aspects of the concept of the present disclosure are provided to more completely describe the concept of the present disclosure to those of ordinary knowledge in the art. The same reference numerals denote the same elements throughout the specification. Furthermore, in the drawings, various elements and areas are shown schematically. Therefore, the concept of the present disclosure is not limited by the relative sizes of elements or the intervals therebetween shown in the accompanying drawings.

Terms such as first and second may be used to describe various components but the components are not limited by the terms. These terms are used only for the purpose of distinguishing one component from another. For example, a first component may be referred to as a second component without departing from the scope of the present disclosure, and similarly, the second component may be referred to as the first component.

The terms used in this application are only used to describe certain aspects and are not intended to limit the concept of the present disclosure. As used herein, the singular expressions are intended to include plural forms as well, unless the context clearly dictates otherwise. It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

Unless otherwise defined, all terms (including technical and scientific terms) used herein have the same meaning as commonly understood by one of ordinary skill in the technical field to which the concept of the present disclosure pertains. In addition, terms commonly used and defined in dictionaries should be interpreted as having a meaning consistent with the context of the related art and should not be interpreted in an overly formal sense unless explicitly defined herein.

When an aspect may be implemented differently, certain operations may be performed in an order different from that described below. For example, two operations described consecutively may be performed substantially concurrently or in an order reverse to that described below.

It will be expected that the shapes of components illustrated in the accompanying drawings may vary, for example, according to manufacturing technology and/or tolerances. Therefore, aspects of the present disclosure should not be construed as being limited by a specific shape of each region illustrated in the present specification but should be understood to cover, for example, a change in the shape of each region, caused during a manufacture process. As used herein, the term "and/or" includes any and all combinations of one or more of the associated listed items. In addition, the term "substrate" used in this specification may refer to a substrate itself, or a stacked structure including a substrate and a predetermined layer or film formed on its surface. In addition, the expression "surface of the substrate" used herein should be understood to mean an exposed surface of the substrate or an outer surface of a layer or film formed on the substrate.

### (First Aspect)

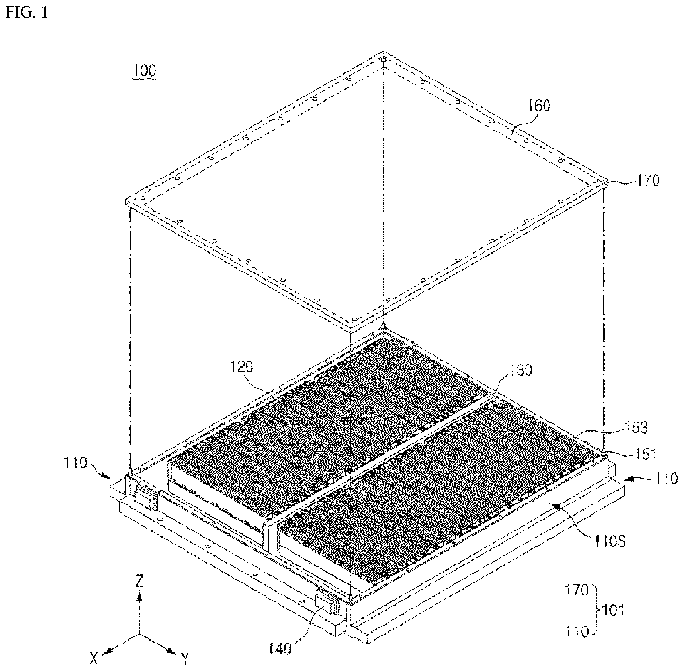

FIG. 1 is a perspective view of a battery pack 100 according to example aspects of the present disclosure.

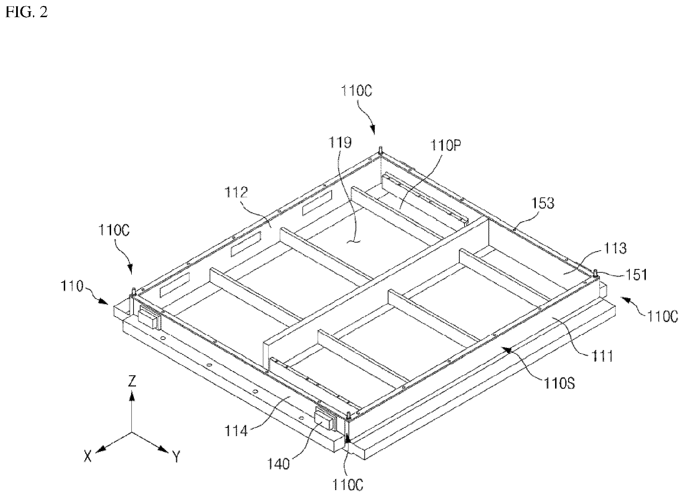

FIG. 2 is a perspective view of some components of the battery pack 100 according to example aspects of the present disclosure.

Referring to FIGS. 1 and 2, the battery pack 100 may include a lower case 110, a plurality of battery assemblies 120 including battery cells therein, a center beam 130, a plurality of exhaust devices 140, a plurality of first buried guides 151, a plurality of second buried guides 153, a pack gasket 160, and an upper case 170. The battery pack 100 is a final form of a battery system mounted on a mobility or the like.

A pack case 101 corresponding to a housing of the battery pack 100 may include the lower case 110 and the upper case 170.

The lower case 110 may provide an inner space 119 for mounting the plurality of battery assemblies 120 therein. In some aspects, the lower case 110 may include a plate part 110P and a side wall 110S. Two directions substantially parallel to the plate part 110P are defined as an X-axis direction and a Y-axis direction, and a direction substantially perpendicular to the plate part 110P of the housing 110 is defined as a Z-axis direction. The X-axis direction, the Y-axis direction, and the Z-axis direction may be substantially perpendicular to one another. Unless otherwise mentioned, the definition of directions will apply to the following drawings.

The plurality of battery assemblies 120 may be on the plate part 110P of the lower case 110. The plate part 110P may support the plurality of battery assemblies 120. The plate part 110P may include an upper surface and a lower surface that are substantially parallel to each other. The upper surface of the plate part 110P may face the plurality of battery assemblies 120. The lower surface of the plate part 110P is opposite to the upper surface of the plate part 110P.

The side wall 110S may horizontally surround the plurality of battery assemblies 120. The side wall 110S may protect the plurality of battery assemblies 120 laterally. The side wall 110S may include a first side wall 111, a second side wall 112, a third side wall 113, and a fourth side wall 114. The first to fourth side walls 111, 112, 113, and 114 may be fixed to one another by a method such as friction stir welding or spot welding but are not particularly limited.

The first and second side walls 111 and 112 may be substantially perpendicular to the Y-axis direction. Each of the third and fourth side walls 113 and 114 may be substantially perpendicular to the X-axis direction. In some aspects, the first and second side walls 111 and 112 may cover side surfaces of the plate part 110P. In some aspects, the third and fourth side walls 113 and 114 may be on the plate part 110P.

In some aspects, the first to fourth side walls 111, 112, 113, and 114 may be provided by an extrusion process. According to example aspects, the first to fourth side walls 111, 112, 113, and 114 may each include an internal empty space, thus reducing the weight of the side wall 110S. According to example aspects, the empty space of each of the first to fourth side walls 111, 112, 113, and 114 may be a venting path of a gas or a channel of a refrigerant.

Hereinafter, the technical idea of the present disclosure will be described with reference to an aspect in which each of the plurality of battery assemblies 120 does not include a module frame. However, the above description is intended to provide only a non-limiting example and thus should not be understood as limiting the technical idea of the present disclosure in any sense. Based on the above description, technicians of ordinary skill in the art will be able to easily derive an aspect in which battery cells are directly mounted in a pack case, as well as a battery pack employing a plurality of battery assemblies each including a module frame.

The center beam 130 may isolate elements mounted on the lower case 110 from each other. Accordingly, the center beam 130 may prevent an undesired short circuit from occurring between the plurality of battery assemblies 120 while protecting the plurality of battery assemblies 120.

The center beam 130 may extend between the third and fourth side walls 113 and 114. The center beam 130 may extend in the X-axis direction. The center beam 130 may be in contact with the third side wall 113 and the fourth side wall 114. The center beam 130 may isolate the plurality of battery assemblies 120 from each other. The center beam 130 may be interposed between the plurality of battery assemblies 120.

An arrangement of the center beam 130 and the plurality of battery assemblies 120 shown in FIG. 1 is a non-limiting example and does not limit the technical idea of this disclosure in any sense. A battery pack that includes various arrangements and numbers of a center beam and battery assemblies will be easily derived by those of ordinary skill in the art, based on the above description.

The plurality of exhaust devices 140 may be coupled to the fourth side wall 114. The fourth side wall 114 may include a plurality of exhaust holes connected to the plurality of exhaust devices 140. The plurality of exhaust holes may be configured to provide a path in which a gas and heat are discharged from the inside of the battery pack 100.

The plurality of exhaust devices 140 may be configured to delay thermal propagation by discharging a high-temperature gas from the inside of the battery pack 100 to the outside when at least one of the plurality of battery assemblies 120 is in a thermal runaway state.

Here, the thermal runaway state of the plurality of battery assemblies 120 is a state in which a change of temperature of the plurality of battery assemblies 120 accelerates the change of temperature, i.e., an uncontrollable positive feedback. The temperature of the plurality of battery assemblies 120 that are in the thermal runaway state may sharply increase and a large amount of a high-pressure gas and combustion debris may be discharged.

In some aspects, the plurality of first buried guides 151 may be on the side wall 110S. The plurality of first buried guides 151 may be on corners 110C of an upper surface of the side wall 110S. The plurality of first buried guides 151 may be coupled to the corners 110C of the upper surface of the side wall 110S. The plurality of first buried guides 151 may be partially buried in the side wall 110S. The plurality of first buried guides 151 may partially protrude from the side wall 110S.

The plurality of second buried guides 153 may be on the side wall 110S. The plurality of second buried guides 153 may be on the upper surface of the side wall 110S. The plurality of second buried guides 153 may be interposed between the corners 110C of the side wall 110S. The plurality of second buried guides 153 may be interposed between the plurality of first buried guides 151. The plurality of second buried guides 153 may be coupled to the upper surface of the side wall 110S. The plurality of second buried guides 153 may be partially buried in the side wall 110S. The plurality of second buried guides 153 may partially protrude from the side wall 110S.

Each of the first and second buried guides 151 and 153 may include a metal material. Each of the first and second buried guides 151 and 153 may include, for example, aluminum. Each of the first and second buried guides 151 and 153 may include, for example, steel such as carbon steel, nickel steel, chromium steel, nickel chromium steel, or manganese steel.

The battery pack 100 may further include electronic components. In some aspects, the electronic components may be mounted on the lower case 110. In some aspects, the electronic components may be disposed between the fourth side wall 114 on which the exhaust devices 140 are installed and the plurality of battery assemblies 120. In some aspects, the electronic components may include an electronic device required to drive the battery pack 100.

In some aspects, the electronic components may include, for example, a battery management system (BMS). The BMS may be configured to monitor, balance, and control the battery pack 100. In some aspects, the monitoring of the battery pack 100 may include measuring voltages and currents of certain nodes inside the plurality of battery assemblies 120 and measuring temperatures at set positions in the battery pack 100. In some aspects, the battery pack 100 may include measuring devices for measuring voltages, currents, and temperatures as described above.

The balancing of the battery pack 100 is an operation of reducing a deviation between the plurality of battery assemblies 120. The controlling of the battery pack 100 includes preventing overcharging, over-discharging, and overcurrent. Through monitoring, balancing, and controlling, the battery pack 100 may be operated under optimal conditions, thereby preventing a reduction of or reducing the lifespan of each of the plurality of battery assemblies 120.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery assemblies 120 and the external load (e.g., a motor of a vehicle), when abnormal voltage such as voltage surge occurs.

The battery pack 100 may further include a plurality of bus bars configured to electrically connect the plurality of battery assemblies 120. The plurality of battery assemblies 120 may be connected in series and/or in parallel by the plurality of bus bars. Accordingly, the battery pack 100 may be configured to output a high voltage to an external load (e.g., a motor of a vehicle).

The pack gasket 160 may include a material with elasticity in response to pressure applied to couple the upper case 170 and the lower case 110. In addition, the pack gasket 160 may include a material with sufficient stiffness to withstand high temperature and high pressure situations occurring inside the pack case 101. In some aspects, the pack gasket 160 may include rubber synthesized from a material such as an ethylene-propylene diene monomer (EPDM). In some aspects, the pack gasket 160 may include a metal piece (metal pieces). A configuration of the pack gasket 160 will be described in more detail below.

When the lower case 110 and the upper case 170 are coupled to each other, the pack gasket 160 may be interposed between the lower case 110 and the upper case 170. The lower case 110 and the upper case 170 may press the pack gasket 160 to cause the pack gasket 160 to deform to a some extent. Accordingly, the battery pack 100 may be sealed, and an inner space of the battery pack 100 may be blocked from an external fluid.

In some aspects, the pack gasket 160 may be coupled to the upper case 170 and thereafter the upper case 170 coupled to the pack gasket 160 may be coupled to the lower case 110. In some aspects, the pack gasket 160 may be coupled to the upper case 170 by welding. In some aspects, the pack gasket 160 may be coupled to the upper case 170 by a fastening means.

The upper case 170 may be coupled to the lower case 110. In some aspects, the upper case 170 may include a main surface and an edge part. The main surface may cover elements, such as the plurality of battery assemblies 120 and electronic components, which are mounted on the battery pack 100. The edge part is a surface that is in contact with the lower case 110. In some aspects, the upper case 170 may have a flat plate shape, and in this case, the edge part may horizontally surround the main surface. In some aspects, the main surface may be elevated compared to the edge part, and the edge part and the main surface may be connected by a bent portion.

In some aspects, the upper case 170 may be coupled to the side wall 110S of the lower case 110 through the first and second buried guides 151 and 153. In some aspects, the upper case 170 may be coupled to the side wall 110S of the lower case 110 by other fastening means. For example, the upper case 170 may be coupled to the side wall 110S of the lower case 110 by bolt-nut coupling.

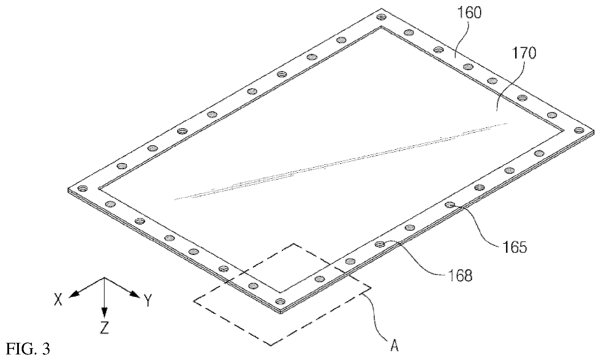

FIG. 3 is a perspective view schematically illustrating a state in which the upper case 170 and the pack gasket 160 of FIG. 1 are coupled to each other. The upper case 170 and the pack gasket 160 of FIG. 3 are similar to the upper case 170 and the pack gasket 160 of FIG. 1 when they are inverted.

Referring to FIG. 3, the pack gasket 160 may extend along portions of the upper case 170 and the lower case 110 that are coupled to each other. The pack gasket 160 may be provided along a perimeter of the upper case 170. The pack gasket 160 may be provided in a ring shape to surround a part of the pack case 101 corresponding to the inner space.

A gasket fastening hole 168 through which a fastener may pass when the upper case 170 is coupled to the lower case 110 may be provided in the pack gasket 160. The upper case 170 includes a lid fastening hole through which a fastener may pass when the upper case 170 is fastened to the lower case 110. The gasket fastening hole 168 may be provided in a size corresponding to the lid fastening hole and at a position on the pack gasket 160 corresponding to the lid fastening hole.

The pack gasket 160 may be fixed to the upper case 170. In some aspects, the pack gasket 160 may be fixed to the upper case 170 by a method such as welding or brazing. The pack gasket 160 may be fixed to the upper case 170 by a method in which a fastener is not used.

In some aspects, when the pack gasket 160 is coupled to the upper case 170 by welding or brazing, coupling spots 165 at which welding or brazing is performed may be provided at certain intervals. The coupling spots 165 and the gasket fastening hole 168 may be disposed not to overlap each other.

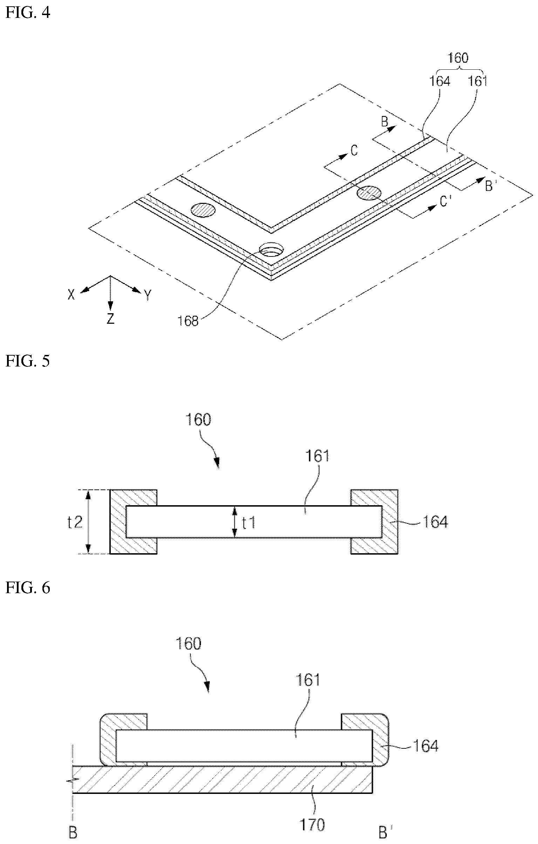

FIG. 4 is a partial enlarged view of a part of FIG 3 indicated by A. FIG. 5 is a cross-sectional view of a cross section of the pack gasket 160 of FIG. 4 alone taken along line B-B' when the pack gasket 160 is not coupled to the upper case 170.

Referring to FIGS. 4 and 5, the pack gasket 160 includes a gasket body 161 and a sealing material 164 on an edge of the pack gasket 160.

The gasket body 161 may be in the form of a strip extending along a direction in which the pack gasket 160 extends. That is, the gasket body 161 may have a width corresponding to a flange part of the upper case 170 and extend along the direction in which the pack gasket 160 extends. The gasket body 161 may have a certain thickness.

In some aspects, the gasket body 161 may extend along an entire length of the pack gasket 160. In some aspects, the gasket body 161 may extend along part of the entire length of the pack gasket 160.

In some aspects, the gasket body 161 may extend along part of the entire length of the pack gasket 160, and include two or more gasket bodies 161. In other aspects, the gasket body 161 may extend along the entire length of the pack gasket 160 and include one gasket body 161.

In some aspects, the stiffness of the gasket body 161 may be higher than the stiffness of the sealing material 164. That is, a degree of deformation of the gasket body 161 may be lower than that of the sealing material 164 when the same force is applied thereto.

In some aspects, the gasket body 161 may include a metal. In some aspects, a material of the gasket body 161 may be, but is not limited to, iron, iron alloy, stainless steel, aluminum, aluminum alloy, copper, copper alloy or the like.

The sealing material 164 may be provided on an edge portion of the gasket body 161 in a width direction.

In some aspects, the sealing material 164 may cover a side of the edge portion of the gasket body 161 in the width direction. In some aspects, the sealing material 164 may extend in a longitudinal direction of the gasket body 161 along the side of the edge portion of the gasket body 161 in the width direction. In some aspects, the sealing material 164 may cover all sides of the gasket body 161. In some aspects, the sealing material 164 may cover both sides of the gasket body 161.

In some aspects, the sealing material 164 may extend from the side of the edge portion of the gasket body 161 to partially cover upper and lower sides of the edge portion. In some aspects, a center portion of the gasket body 161 in the width direction may be exposed from the sealing material 164. That is, the center portion of the gasket body 161 in the width direction is not covered with the sealing material 164.

A dimension t1 of the gasket body 161 in a thickness direction is less than a dimension t2 of the sealing material 164 in the thickness direction. The dimensions t1 and t2 in the thickness direction are dimensions of the pack gasket 160 alone when the pack gasket 160 is not coupled to the battery pack 100. In some aspects, the dimension t2 of the sealing material 164 in the thickness direction may be about 1.01 to about 1.50 times the dimension t1 of the gasket body 161 in the thickness direction.

When the upper case 170 and the lower case 110 are coupled to each other, the pack gasket 160 therebetween may be partially deformed to seal a space between the upper case 170 and the lower case 110. In this case, the gasket body 161 is deformed partially but deformation of the sealing material 164 is more dominant. In some aspects, the gasket body 161 may act as a stopper that limits deformation of the sealing material 164 when the sealing material 164 is deformed. That is, when the upper case 170 and the lower case 110 are coupled to each other, the sealing material 164 is compressed in the thickness direction, and the gasket body 161 may prevent the sealing material 164 from being deformed to an extent greater than the thickness of the gasket body 161.

As shown in FIG. 4, the gasket fastening hole 168 or the coupling spots 165 are not in contact with the sealing material 164.

FIG. 6 is a cross-sectional view of a cross section of the pack gasket 160 of FIG. 4 taken along line B-B' when the pack gasket 160 is coupled to the upper case 170.

Referring to FIG. 6, the sealing material 164 has elasticity and is elastically compressed against the upper case 170 when the pack gasket 160 is coupled to the upper case 170. When the coupling between the pack gasket 160 and the upper case 170 is canceled, the sealing material 164 that is deformed may be restored to the original state or close to the original state.

The sealing material 164 includes an elastic material, and a material that can be used for the pack gasket 160 and be known in the art may be employed. The sealing material 164 may include rubber synthesized from a material such as ethylene-propylene diene monomer (EPDM).

As shown in FIG. 6, the sealing material 164 is deformed in a lateral direction and an opposite direction as a force is applied from the upper case 170 to a side of the sealing material 164 facing the upper case 170. FIG. 6 illustrates that there is a slight gap between the central portion of the gasket body 161 in the width direction and the upper case 170 but the gap is not necessarily needed. In some aspects, the central portion of the gasket body 161 in the width direction and the upper case 170 may be in contact with each other. The central portion of the gasket body 161 in the width direction and the upper case 170 may be in contact with each other when the gasket body 161 and/or the upper case 170 is slightly deformed toward the gasket body 161 or the upper case 170.

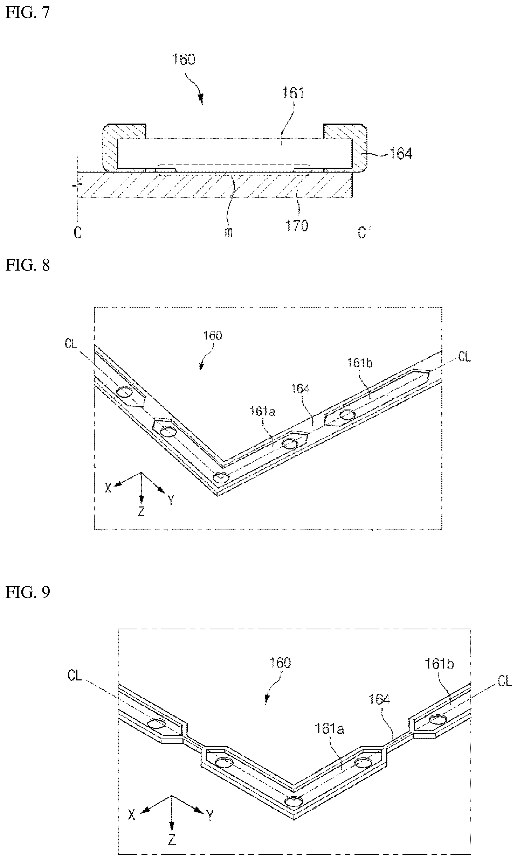

FIG. 7 is a cross-sectional view of a cross section of the pack gasket 160 of FIG. 4 taken along line C-C' when the pack gasket 160 is coupled to the upper case 170.

Referring to FIG. 7, a part of the gasket body 161 is coupled to the upper case 170 by welding. That is, the gasket body 161 may be coupled to the upper case 170 through a welding part m.

When the gasket body 161 is coupled to the upper case 170 by another method such as brazing, there may be a separate layer between the gasket body 161 and the upper case 170 according to a coupling method.

As described above with reference to FIG. 6, the sealing material 164 elastically compressed against the upper case 170 when the pack gasket 160 is coupled to the upper case 170. When the coupling between the pack gasket 160 and the upper case 170 is canceled, the sealing material 164 that is deformed may be restored to the original state or close to the original state.

Conventionally, a pack gasket is formed of rubber with elasticity and thus may not withstand internal pressure and may be pushed in a lateral direction when a thermal event occurs in the battery pack 100. In the pack gasket of the related art, a metal bushing is partially provided to only a portion of the pack gasket corresponding to a fastening hole and thus it is difficult to prevent the pack gasket from being pushed in the lateral direction.

In the present disclosure, a fraction of a part shielded by a metal member with high stiffness in a direction in which the pack gasket 160 extends is very high, and thus, a phenomenon that the pack gasket 160 is pushed in the lateral direction may be significantly improved even when a thermal event occurs in the battery pack 100. Furthermore, as airtightness performance is improved, a bracket can be omitted, thus contributing to a slim appearance of the battery pack 100. In addition, because the upper case 170 and the lower case 110 are combined while the pack gasket 160 is coupled to the upper case 170 in advance, thus simplifying an assembly process.

### (Additional Aspects)

In some aspects, the gasket body 161 may extend along an entire length of the pack gasket 160 as shown in FIG. 4. In some aspects, the pack gasket 160 may include two or more gasket bodies 161, and the gasket bodies 161 may be connected to each other using the sealing material 164.

FIG. 8 is a partial perspective view illustrating that two or more gasket bodies 161a and 161b are connected using a sealing material 164 according to an aspect of the present disclosure.

Referring to FIG. 8, the gasket bodies 161a and 161b may be arranged along a longitudinal direction of a pack gasket 160 and connected to each other by the sealing material 164.

The sealing material 164 may be provided on an edge of a first gasket body 161a as described with reference to FIGS. 3 and 4. The sealing material 164 may extend to a second gasket body 161b adjacent to the first gasket body 161a. Furthermore, the sealing material 164 may continuously extend to an edge of the second gasket body 161b. In some aspects, a plurality of gasket bodies arranged in a direction in which the pack gasket 160 extends may be connected using the sealing material 164 by the above method.

In some aspects, some of the plurality of gasket bodies arranged in the direction in which the pack gasket 160 extends may be connected using the sealing material 164 by the above method. In some aspects, all of the plurality of gasket bodies arranged in the direction in which the pack gasket 160 extends may be connected using the sealing material 164 by the above method.

In some aspects, a width of the pack gasket 160 on a region on which the gasket bodies 161a and 161b are located may be substantially constant. A width of a central portion of the pack gasket 160 in a longitudinal direction in which the gasket bodies 161a and 161b extend may be substantially the same as a width of a part of the pack gasket 160 connecting the first gasket body 161a and the second gasket body 161b using the sealing material 164.

FIG. 9 is a partial perspective view illustrating that two or more gasket bodies 161a and 161b are connected by a sealing material 164 according to another aspect of the present disclosure.

Referring to FIG. 9, the gasket bodies 161a and 161b may be arranged along a longitudinal direction of a pack gasket 160 and connected to each other by the sealing material 164. The present aspect is different from the aspect of FIG. 8 in that a width of the pack gasket 160 varies depending on a position thereof in a direction in which the pack gasket 160 extends. In detail, a width of a part of the pack gasket 160 connecting the first gasket body 161a and the second gasket body 161b using the sealing material 164 may be less than a width of a central portion of the pack gasket 160 in a longitudinal direction in which the gasket bodies 161a and 161b extend.

In some aspects, the part connecting the first gasket body 161a and the second gasket body 161b using the sealing material 164 may be formed of only the sealing material 164.

A ratio of a total length of the gasket bodies 161a and 161b to a total length of the pack gasket 160
along a center line CL (see FIGS. 8 and 9) of the pack gasket 160 may be 60% or more. In some aspects, the ratio of the total length of the gasket bodies 161a and 161b to the total length of the pack gasket 160 along the center line CL may be 100%. In some aspects, the ratio of the total length of the gasket bodies 161a and 161b to the total length of the pack gasket 160 along the center line CL may be 60% or more, 65% or more, 70% or more, 75% or more, 80% or more, 85% or more, 90% or more, or 95% or more, or may be in a range of two of these figures.

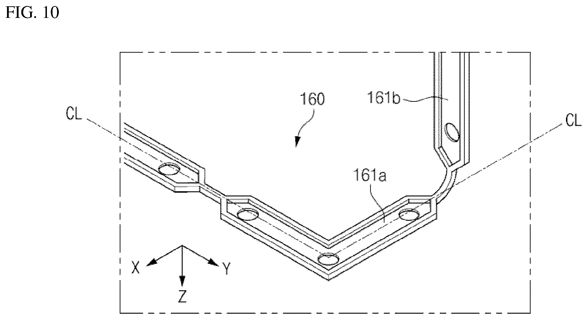

FIG. 10 is a perspective view illustrating a state in which a part connecting the first gasket body 161a and the second gasket body 161b with a sealing material 164 is bent.

Referring to FIG. 10, the pack gasket 160 may be configured to be bent between the first gasket body 161a and the second gasket body 161b that are adjacent to each other. The sealing material 164 may be provided between the first gasket body 161a and the second gasket body 161b that are adjacent to each other, and the sealing material 164 has elasticity and thus be bendable in a specific direction or an arbitrary direction.

Because the pack gasket 160 is bendable between the gasket bodies 161a and 161b, the pack gasket 160 may be very easily transported or handled.

Although the pack gasket 160 of the aspect of FIG. 9 has been described above with reference to FIG. 10, the pack gasket 160 of the aspect of FIG. 8 is also bendable. In the case of the pack gasket 160 of FIG. 8, a width of the sealing material 164 between the gasket bodies 161a and 161b is greater than that in the aspect of FIG. 9, but the sealing material 164 has elasticity and thus may have a certain degree of flexibility.

Although the aspects of the present disclosure have been described above in detail, the present disclosure may be implemented in many different forms by those of ordinary skill in the art, to which the present disclosure pertains, without departing from the spirit and scope of the present disclosure defined in the appended claims. Therefore, it should be understood that all modifications in aspects of the present disclosure fall within the scope of the present disclosure.

## Claims

1. A battery pack comprising:
a pack case including a lower case and an upper case that define an inner space when coupled together;
a plurality of battery cells in the inner space; and
a pack gasket between the lower case and the upper case,
wherein the pack gasket comprises:
a gasket body configured to extend along portions of the upper case and the lower case when coupled together; and
an elastic sealing material on an edge of the gasket body in a width direction of the gasket body.

2. The battery pack of claim 1, wherein a central portion of the gasket body in the width direction is exposed from the elastic sealing material.

3. The battery pack of claim 2, wherein a dimension of the gasket body in a thickness direction of the pack gasket is less than a dimension of the elastic sealing material in the thickness direction.

4. The battery pack of claim 1, wherein the gasket body is coupled to the upper case by welding.

5. The battery pack of claim 1, wherein stiffness of the gasket body is higher than stiffness of the elastic sealing material.

6. The battery pack of claim 5, wherein the gasket body includes a metal.

7. The battery pack of claim 1, wherein the pack gasket includes a plurality of gasket bodies and the gasket body is one of the plurality of gasket bodies,
wherein the elastic sealing material extends between adjacent gasket bodies of the plurality of gasket bodies.

8. The battery pack of claim 7, wherein a width of the pack gasket between two adjacent gasket bodies is less than a width of a central portion of the pack gasket in a longitudinal direction in which one of the two adjacent gasket bodies extends.

9. The battery pack of claim 7, wherein a width of the pack gasket between two adjacent gasket bodies is substantially same as a width of a central portion of the pack gasket in a longitudinal direction in which one the two adjacent gasket bodies extends.

10. The battery pack of claim 7, wherein the pack gasket is configured to bend between adjacent gasket bodies of the plurality of gasket bodies.

11. The battery pack of claim 7, wherein the gasket body includes metal, and
a ratio of a total length of the plurality of gasket bodies to a total length of the pack gasket along a center line is 60% or more.

12. A battery pack comprising:
a pack case including a lower case and an upper case that define an inner space when coupled together;
a plurality of battery cells in the inner space; and
a pack gasket between the lower case and the upper case,
wherein the pack gasket is coupled to the upper case by welding and coupled to the lower case through a fastener.

13. The battery pack of claim 12, wherein the pack gasket includes a metal strip coupled to the upper case by welding.

14. The battery pack of claim 13, wherein the pack gasket further includes a sealing material on an edge of the metal strip.

15. The battery pack of claim 14, wherein the sealing material comprises an elastic member, and
the sealing material is elastically compressed against the upper case at a position on the upper case to which the pack gasket is coupled by welding.
